# FASCICULE DE BREVET EUROPEEN

(11) **EP 0 976 118 B1**
(45) Date de publication et mention de la délivrance du brevet: **25.07.2001**
(21) Numéro de dépôt: 98920570.3
(22) Date de dépôt: 06.04.1998
(51) Int. Cl.: G09F 3/12, G09F 3/02, A01K 11/00

(54) **PROCEDE DE MARQUAGE INFALSIFIABLE, INDELEBILE ET CONTRASTE D'OBJETS NOTAMMENT ETIQUETTES**
VERFAHREN ZUR FÄLSCHUNGSSICHEREN, PERMANENTEN UND KONTRASTIERENDEN MARKIERUNG VON OBJEKTEN, INSBESONDERE ETIKETTEN
TAMPER-RESISTANT, INDELIBLE AND CONTRASTING METHOD FOR MARKING OBJECTS, IN PARTICULAR LABELS

(30) Priorité: 18.04.1997 FR 9704996
(43) Date de publication de la demande: 02.02.2000
(73) Titulaire: Societe Chevillot S.A., 81011 Albi Cedex 09 (FR)
(72) Inventeur: VANDEPUTTE, Bernard, F-92400 Courbevoie (FR)
(74) Mandataire: Ravina, Bernard
(86) Numéro de dépôt international: FR9800690
(87) Numéro de publication internationale: WO9848398

(56) Documents cités:
- WO-A-95/34263
- US-A- 4 581 834
- US-A- 4 646 455

## Description

La présente invention concerne un procédé de marquage infalsifiable et visible d'objets assurant un bon contraste et une visibilité accrue du marquage et les objets ainsi marqués.

La présente invention s'applique entre autres objets, aux étiquettes de marquage utilisés pour les animaux d'élevage mais peut avoir d'autres applications.

Le marquage des animaux d'élevage s'effectue par la fixation d'une ou deux étiquettes sur l'oreille de l'animal. L'étiquette porte un marquage constitué de signes et/ou de chiffres et/ou lettres dont une partie est utilisée par l'éleveur pour identifier l'animal sur le terrain.

Il est apparu nécessaire que ces numéros soient indélébiles pour être inviolables et ne pas servir de support à des fraudes.
L'étiquette supportant le marquage est réalisée généralement en matière synthétique de type connu.

L'indébilité du marquage a été obtenue à ce jour par l'utilisation du laser qui a pour effet d'obtenir un marquage dans la masse ou dans l'épaisseur de la feuille constituant l'étiquette.
Cependant, celui-ci ne présente pas un contraste accentué par rapport à la couleur de l'étiquette ; de ce fait, la distance de lecture est limitée.
C'est ainsi qu'en France où les étiquettes sont de couleur saumon pour les bovins, l'utilisation de la gravure au laser donne un marquage de couleur grise.

La présente invention vise à obvier à ces inconvénients.
A cet effet, le procédé selon la présente invention de marquage infalsifiable, indélébile et contrasté d'objets, se caractérise essentiellement en ce que le marquage est réalisé en deux opérations, un marquage dans la masse, c'est à dire dans l'épaisseur de l'objet et un marquage de surface superposé au dit marquage dans la masse.

Suivant encore une autre caractéristique de l'invention, le marquage est réalisé en deux opérations, un marquage par modification de la structure de l'objet par phénomène thermico-chimique et un dépôt en surface.

Suivant une autre caractéristique de l'invention, le marquage dans la masse est réalisé par une gravure au laser et le marquage de surface superposé au précédent est réalisé par encrage, par exemple selon la technique dite à jet d'encre ; soit l'inverse, c'est à dire que le marquage de surface est apposé en premier et que le marquage dans la masse par exemple par gravure laser est réalisé ensuite.

Suivant encore une autre caractéristique de l'invention, le marquage dans la masse est réalisé par des traits espacés définissant le contour de chaque signe, lettre ou chiffre par exemple, entre lesquels est laissé un espace qui est recouvert par le marquage de surface. De préférence, selon une autre caractéristique de l'invention, les traits sont parallèles.

D'autres avantages et caractéristiques de l'invention apparaîtront à la lecture de la description ci-après d'une forme de réalisation de l'invention donnée à titre d'exemple non limitatif illustrée par les dessins joints et dans lesquels :
- la figure 1 représente une vue en plan d'une étiquette avec marquage selon l''invention ;
- la figure 2 est une vue partielle représentant en vue de dessus le marquage dans la masse selon l'invention avant superposition du marquage de surface ;
- la figure 3 est une vue en coupe selon la ligne AA ;
- la figure 4 est une vue en coupe selon la ligne AA représentant le dépôt en surface après apposition.

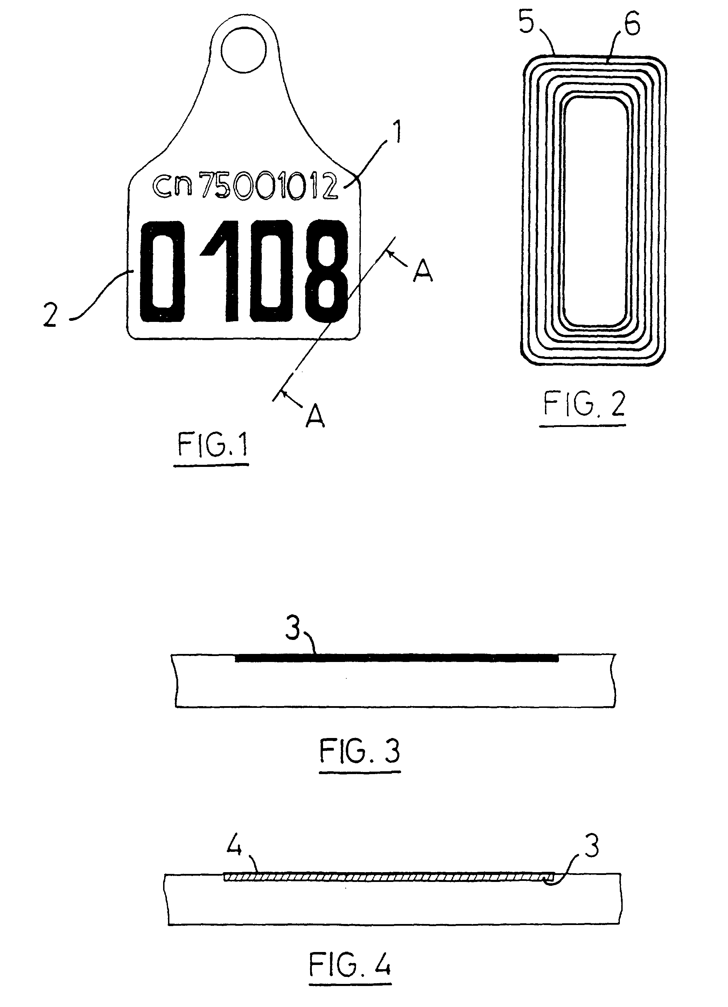

Telle que représentée en figure 1, l'étiquette de marquage des animaux, réalisée par mise en oeuvre du procédé objet de l'invention dont elle fait partie intégrante, est constituée d'une feuille de matière synthétique souple par exemple du polyuréthane.
Cette étiquette porte un marquage constitué de signes notamment de lettres et/ou de chiffres constituant le numéro officiel d'identification.

Les lettres et/ou chiffres de la ligne supérieure 1 en petits caractères, servent à désigner le troupeau concerné.
Les lettres et/ou chiffres de la ligne inférieure 2 de plus grande dimension puisqu'elles occupent plus de la moitié de la surface utile de l'étiquette servent à repérer l'animal au sein du dit élevage.

Il est apparu que s'il était indispensable que l'ensemble du numéro soit indélébile et donc infalsifiable, il était également indispensable que le deuxième numéro, celui repérant l'animal soit facilement lisible, même à distance par l'éleveur d'où l'importance dimensionnelle donnée à cette partie du numéro.

La recherche de l'inviolabilité et de l'impossibilité d'effacer le numéro en tout ou en partie a très vite conduit à l'utilisation de marquage de l'étiquette dans la masse.

La technique envisageable et connue de gravure en creux des signes constituant le numéro ne donne pas satisfaction puisqu'elle ne modifie pas la coloration du matériau de l'étiquette.
La coloration par apposition de pigments de surface donne satisfaction au niveau de la lisibilité à distance du numéro.
Cependant, ces pigments peuvent s'effacer dans le temps et notamment par utilisation de solvants.

Selon l'invention, le procédé mis en oeuvre fait appel à un marquage en deux opérations :
- un marquage dans la masse du support constituée par la feuille de l'étiquette ;
- un marquage de surface superposé au marquage dans la masse, c'est à dire réalisé dans le même contour que les signes, chiffres ou lettres obtenus par le premier marquage.

L'inverse peut être réalisé, c'est à dire que l'on peut en premier réaliser un marquage de surface et réaliser ensuite un marquage dans la masse superposé au premier.

Cette combinaison de deux marquages superposés permet d'obtenir un marquage visible et indélébile puisque même si le marquage de surface vient à s'effacer ou a été effacé volontairement, le marquage dans la masse subsiste et permet de déceler la fraude.
En cas de fraude, les signes lettres ou chiffres de marquage frauduleux ne se superposeront pas au marquage dans la masse.

Selon le procédé objet de l'invention, le marquage dans la masse est réalisé par une gravure et est de ce fait indélébile.
Le marquage est réalisé selon un mode de réalisation de l'invention par modification de la structure du matériau de l'étiquette par phénomène thermicochimique et le marquage de surface est réalisé par un dépôt de matière adaptée de préférence colorée ou pigmentée.
La gravure est réalisée par un rayon laser ou par tout autre moyen.

La figure 3 est une vue en coupe d'une étiquette après réalisation sur laquelle est représenté le marquage au laser référencé par 3.

La figure 4 est une vue en coupe d'une étiquette après réalisation sur laquelle est représenté le marquage de surface référencé par 4, le marquage ou la gravure au laser 3 étant représenté hachuré.

Selon l'invention, le marquage s'effectue par modification de la structure de l'étiquette (ou de l'objet à marquer) par phénomène thermicochimique et par un dépôt en surface de matière colorée et/ou pigmentée.

Le marquage au rayon laser donne des signes, lettres ou chiffres de couleur terne, dans les tons gris ; cependant, il présente l'avantage de pénétrer dans la masse par transformation thermique et chimique de celle-ci en profondeur.
De ce fait, il est indélébile.

De préférence, le marquage de surface est réalisé par apposition d'un pigment de coloration, ce qui permet d'obtenir un bon effet de visibilité du marquage.
Les pigments peuvent provenir d'une encre selon la technique connue du jet d'encre ou être apposés de toute manière appropriée.

Comme représenté en figure 2 qui est une vue partielle très agrandie d'un signe apposé sur une étiquette selon l'invention, le marquage dans la masse est selon une forme de réalisation réalisé par des traits parallèles 5 définissant au moins le contour de chacun des signes, chiffres ou lettres à réaliser.

Entre chacune des lignes 5 est laissé un intervalle 6 ou espace qui est recouvert seulement par le marquage de surface, lequel recouvre par ailleurs la totalité de la zone délimitée par le marquage dans la masse, l'un et l'autre étant superposés.
Le marquage au laser peut également être réalisé sans qu'il y ait les intervalles 6 mentionnés plus haut.

Selon une autre forme de réalisation, le marquage au laser est réalisé par des traits formant des boucles ou autres figures géométriques et définissant au moins le contour de chacun des signes, chiffres ou lettres à réaliser, les traits étant suffisamment espacés pour laisser entre eux des intervalles ou espaces destinés à être recouverts par le marquage de surface.

Dans le cadre de la réalisation d'un marquage selon l'invention sur une étiquette pour les animaux d'élevage, au moins une partie des signes, par exemple ceux de la ligne inférieure, sont réalisés par superposition du marquage dans la masse et du marquage de surface.
Cependant, la totalité du marquage de l'étiquette peut être réalisée par superposition des deux marquages.

## Revendications

1. Procédé de marquage comportant des signes, lettres et/ou chiffres infalsifiable, indélébile et contrasté d'étiquettes pour le marquage des animaux caractérisé en ce que le marquage s'effectue par un marquage dans la masse, c'est à dire dans l'épaisseur de l'objet suivi ou précédé par un marquage en surface, au moins une partie des signes du marquage dans la masse et du marquage de surface ayant le même contour en sorte qu'ils soient superposés.

2. Procédé selon la revendication 1 caractérisé en ce que le marquage dans la masse est réalisé par une gravure au laser et que le marquage de surface est réalisé par encrage.

3. Procédé selon les revendications 1 et 2 caractérisé en ce que le marquage dans la masse est réalisé par des traits définissant les contours de chaque signe, constituant le marquage entre lesquels est laissé un espace recouvert par le marquage de surface.

4. Procédé selon la revendication 3 caractérisé en ce que les traits forment des boucles.

5. Etiquette de marquage des animaux réalisée par mise en oeuvre du procédé selon la revendication 1 et l'une quelconque des revendications 2, 3 et 4, ladite étiquette étant réalisée en un matériau synthétique caractérisée en ce que les signes constituant le marquage qu'elle porte sont au moins pour une partie d'entre eux réalisés par un marquage dans la masse sur lequel est apposé et superposé un marquage en surface dont le contour est pour certains signes identique à ceux du marquage de surface.

6. Etiquette de marquage des animaux selon la revendication 5 caractérisée en ce que tous les signes constituant le marquage sont réalisés par un marquage dans la masse et que certains d'entre eux reçoivent un marquage de surface superposé au marquage dans la masse.

7. Etiquette de marquage des animaux selon la revendication 6 caractérisée en ce que le marquage dans la masse est réalisé par une gravure et que le marquage de surface est réalisé par apposition d'un pigment.

8. Etiquette de marquage des animaux selon les revendications 6 et 7 caractérisée en ce que le marquage est réalisé par modification de la structure de l'étiquette par un phénomène thermochimique et par un dépôt en surface.

## Patentansprüche

1. Verfahren zur fälschungssicheren, unlöschbaren (permanenten) und kontrastreichen Markierung von Marken (Etiketten) mit Zeichen, Buchstaben und/oder Ziffern, für die Markierung von Tieren, dadurch gekennzeichnet, dass die Markierung durch eine Markierung in der Masse, d.h. in der Dicke des Objekts, vor oder nach einer Flächenmarkierung erfolgt, wobei zumindest ein Teil der Zeichen der Markierung in der Masse und der Flächenmarkierung die gleiche Kontur aufweist, so dass sie übereinanderliegen.

2. Verfahren nach Anspruch 1, dadurch gekennzeichnet, dass die Markierung in der Masse durch eine Lasergravur und die Flächenmarkierung durch Färbung realisiert werden.

3. Verfahren nach den Ansprüchen 1 oder 2, dadurch gekennzeichnet, dass die Markierung in der Masse durch Striche realisiert wird, welche die die Markierung bildenden Konturen jedes Zeichens definieren und zwischen welchen ein Bereich belassen ist, der von der Flächenmarkierung bedeckt ist.

4. Verfahren nach Anspruch 3, dadurch gekennzeichnet, dass die Striche Schleifen bilden.

5. Markierungsmarke für Tiere, das gemäß dem Verfahren nach Anspruch 1 oder einem der Ansprüche 2, 3 oder 4 realisiert ist, wobei das Etikett aus einem Kunststoffmaterial gebildet ist, dadurch gekennzeichnet, dass die Zeichen, welche die von ihr getragene Markierung bilden, zumindest zu einem Teil davon durch eine Markierung in der Masse realisiert sind, wobei auf dieser Markierung eine Flächenmarkierung aufgebracht und dieser überlagert ist, und die Kontur der Markierung bei einigen Zeichen mit denen der Flächenmarkierung identisch ist.

6. Markierungsmarke für Tiere nach Anspruch 5, dadurch gekennzeichnet, dass alle die Markierung bildenden Zeichen durch eine Markierung in der Masse realisiert sind und dass einige davon eine Flächenmarkierung erhalten, die über der Markierung in der Masse liegt.

7. Markierungsmarke für Tiere nach Anspruch 6, dadurch gekennzeichnet, dass die Markierung in der Masse durch eine Gravur und die Flächenmarkierung durch Aufbringen eines Pigmentes realisiert ist.

8. Markierungsmarke für Tiere nach den Ansprüchen 6 oder 7, dadurch gekennzeichnet, dass die Markierung durch Änderung der Markenstruktur mittels eines thermochemischen Vorgangs und durch eine Abscheidung auf der Oberfläche realisiert ist.

## Claims

1. A method of tamper-resistant, indelible and contrasting marking, comprising signs, letters and/or digits, of tags for marking animals, characterised in that the marking is affected by marking in the material, i.e. within the thickness of the article, followed or preceded by a surface marking, at least one part of the marking signs in the material and of the surface marking having the same contour so that they are superimposed.

2. A method according to claim 1, characterised in that the marking in the material is effected by laser-engraving and the surface marking is effected by inking.

3. A method according to claims 1 and 2, characterised in that the marking in the material is effected by lines defining the contours of each sign, constituting the marking, between which is left a space covered by the surface marking.

4. A method according to claim 3, characterised in that the lines form loops.

5. An animal marking tag produced by carrying out the method according to claim 1 and any one of claims 2,3 and 4, said tag being made from a synthetic material, characterised in that the signs forming the marking which it bears are, for at least one portion thereof, formed by a marking in the material, on which is applied and superimposed a surface marking, the contour of which is for certain signs identical to those of the surface marking.

6. An animal marking tag according to claim 5, characterised in that all the signs forming the marking are produced by a marking in the material and some of them receive a surface marking superimposed on the marking in the material.

7. An animal marking tag according to claim 6, characterised in that the marking in the material is effected by engraving and the surface marking is effected by applying a pigment.

8. An animal marking tag according to claims 6 and 7, characterised in that the marking is effected by modifying the structure of the tag by a thermochemical phenomenon and by surface deposition.
